# EUROPEAN PATENT APPLICATION

(11) **EP 3 952 013 A1**
(43) Date of publication of application: **09.02.2022**
(21) Application number: 20781876.6
(22) Date of filing: 30.03.2020
(51) Int. Cl.: H01M 12/08, H01M 4/90, H01M 4/96, B01J 23/83

(54) **CATALYST FOR AIR ELECTRODES, AIR ELECTRODE AND METAL AIR SECONDARY BATTERY**

(30) Priority: 01.04.2019 JP 2019070138
(71) Applicant: Showa Denko Materials Co., Ltd., Tokyo 100-6606 (JP)
(72) Inventor: IKEDA, Tomoki, Tokyo 100-6606 (JP); TAKAOKA, Kenji, Tokyo 100-6606 (JP)
(74) Representative: Berggren Oy
(86) International application number: PCT/JP2020/014689
(87) International publication number: WO 2020/204005

(57) **Abstract**

A catalyst for an air electrode of a metal air secondary battery, the catalyst containing Ca₂FeCoO₅ and YBaCo₄O₇, in which a mass ratio of a content of the YBaCo₄O₇ to a content of the Ca₂FeCoO₅ is 0.49 to 9.00.

## Description

### Technical Field

The present invention relates to a catalyst for an air electrode, an air electrode, and a metal air secondary battery.

### Background Art

A metal air secondary battery, which is one of candidates of innovative storage batteries, is a battery that uses oxygen in air as a positive electrode active material and uses a metal material in a negative electrode. Oxygen is an element that is less likely to cause problems such as resource supply, cost, and influence on human bodies. Furthermore, oxygen has a high oxidative power, and a high energy density is expected in the metal air secondary battery.

In the air electrode that is a positive electrode of the metal air secondary battery, typically, a carbon material for obtaining conductivity is contained. Furthermore, it is known that a large overvoltage is generally generated in oxygen evolution reaction (OER) at the time of charging. Therefore, in the metal air secondary battery, there is a problem in that deterioration of the carbon material in the above-described air electrode at the time of charging causes a decrease in battery characteristics so that the life-span is shortened, and the metal air secondary battery has not yet been put into practice.

On the other hand, for example, Patent Literature 1 discloses an air electrode using an electron-conductive material represented by LaNi_{1-x-y}CuₓFe_{y}O_{3-δ} (where x > 0, y > 0, x + y < 1, 0 ≤ δ ≤ 0.4) instead of a carbon material.

### Citation List

### Patent Literature

Patent Literature 1: International Publication WO 2016/147720

### Summary of Invention

### Technical Problem

However, in the case of using no carbon material as described in Patent Literature 1, the output characteristics tend to be degraded, and sufficient life-span characteristics may not be obtained. That is, in the technique of Patent Literature 1, it is difficult to attain both of excellent life-span characteristics and excellent output characteristics.

Therefore, an object of the present invention is to provide a metal air secondary battery that is excellent in life-span characteristics and is also excellent in output characteristics.

### Solution to Problem

The present inventors have found that, by using a combination of Ca₂FeCoO₅ (CFCO) and YBaCo₄O₇ (YBCO) as a catalyst promoting a reaction of oxygen (oxygen evolution reaction and/or oxygen reduction reaction), both of excellent life-span characteristics and excellent output characteristics can be attained.

An aspect of the present invention relates to a catalyst for an air electrode of a metal air secondary battery. This catalyst contains Ca₂FeCoO₅ and YBaCo₄O₇, and a mass ratio of a content of the YBaCo₄O₇ to a content of the Ca₂FeCoO₅ is 0.49 to 9.00.

By using the catalyst of the above-described aspect in an air electrode of a metal air secondary battery, a metal air secondary battery that is excellent in both of life-span characteristics and output characteristics can be obtained.

Another aspect of the present invention relates to an air electrode used in a metal air secondary battery. This air electrode includes a catalyst layer containing the above-described catalyst and a conductive carbon material.

In an embodiment, the air electrode may further include a gas diffusion layer having conductivity.

Still another aspect of the present invention relates to a metal air secondary battery including the above-described air electrode, a negative electrode, and an electrolyte.

### Advantageous Effects of Invention

According to the present invention, it is possible to provide a metal air secondary battery that is excellent in life-span characteristics and is also excellent in output characteristics, an air electrode used in this metal air secondary battery, and a catalyst used in this air electrode.

### Brief Description of Drawings

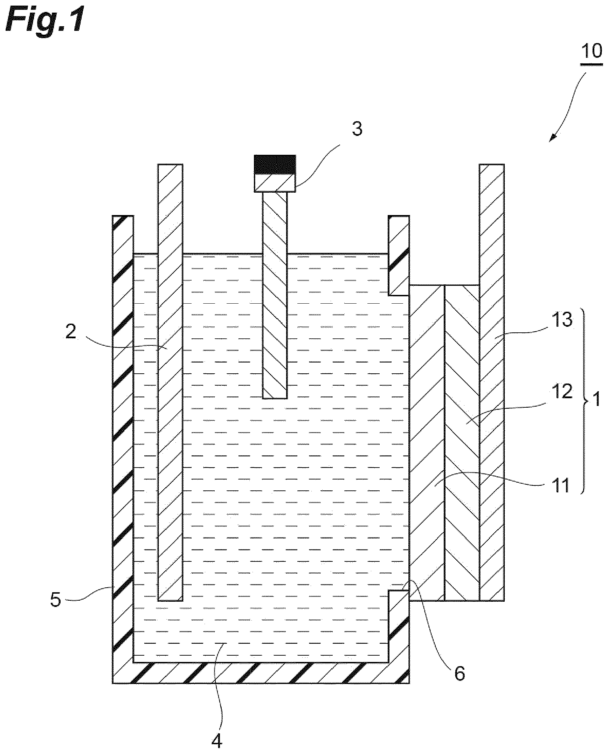

FIG. 1 is a schematic cross-sectional view illustrating an experimental cell used in performance evaluation of Examples.

### Description of Embodiments

In the present specification, a numerical range that has been indicated by use of "to" indicates the range that includes the numerical values which are described before and after "to", as the minimum value and the maximum value, respectively. In the numerical ranges that are described as steps in the present specification, the upper limit value and the lower limit value of the numerical range of one stage can be arbitrarily combined. Furthermore, in the present specification, the term "layer" encompasses not only a case where the layer is formed over the whole observed region where the layer is present, but also a case where the layer is formed only on a part of the region.

Hereinafter, preferred embodiments of the present invention will be described. However, the present invention is not limited to the following embodiments at all.

### <Catalyst for air electrode>

A catalyst for an air electrode of an embodiment is a catalyst that is used as a catalyst promoting an oxygen reaction in an air electrode of a metal air secondary battery and contains at least Ca₂FeCoO₅ and YBaCo₄O₇. Note that, in the present specification, for the sake of convenience, "YBaCo₄O₇" is described, but "YBaCo₄O_{7+δ} (0 ≤ δ ≤ 1.5)" is encompassed in "YBaCo₄O₇".

A mass ratio r (YBaCo₄O₇/Ca₂FeCoO₅) of the content of YBaCo₄O₇ to the content of the Ca₂FeCoO₅ is, for example, 0.49 to 9.00. According to the catalyst having such a mass ratio r, both of life-span characteristics and output characteristics of the metal air secondary battery can be improved. That is, the metal air secondary battery that includes the air electrode containing the above-described catalyst has excellent life-span characteristics and excellent output characteristics. The mass ratio r is preferably 1.50 or more, more preferably 2.00 or more, further preferably 3.00 or more, and particularly preferably 4.00 or more, from the viewpoint of having more excellent output characteristics. The mass ratio r is preferably 5.00 or less, more preferably 4.00 or less, further preferably 3.00 or less, and particularly preferably 2.50 or less, from the viewpoint of having more excellent life-span characteristics. The mass ratio r is preferably 1.50 to 5.00 and more preferably 2.00 to 4.00, from the viewpoint of having more excellent life-span characteristics and more excellent output characteristics. The above-described mass ratio r can be checked, for example, by an analytical method such as inductively coupled plasma-atomic emission spectrometry (ICP-AES).

Ca₂FeCoO₅ has, for example, a particulate shape. The particle diameter of Ca₂FeCoO₅ is not particularly limited, but may be 0.01 µm or more, 0.02 µm or more, 1 µm or more, or 2 µm or more, and may be 50 µm or less, 20 µm or less, 1 µm or less, or 0.5 µm or less. Note that, the particle diameter described in the present specification refers to a volume average particle diameter that is measured by a transmission electron microscope (TEM).

A specific surface area of Ca₂FeCoO₅ may be 0.1 m²/g or more or 1 m²/g or more, and may be 100 m²/g or less. Note that, the specific surface area described in the present specification refers to a value that is obtained in such a manner that a sample is treated using a pretreatment apparatus (VacPrep061, manufactured by Micromeritics Instrument Corporation) and then this treated sample is measured using a specific surface area/pore distribution measuring apparatus (TriStar 3000, manufactured by Micromeritics Instrument Corporation) by a BET method.

Ca₂FeCoO₅ can be synthesized by a solid phase reaction method (for example, a method described in F. Ramezanipour et al., Chem. Mater. 2010, 22, 6008, or the like) and can also be synthesized by a liquid phase reaction method. For example, first, a Ca salt (for example, Ca(NO₃)₂), an Fe salt (for example, Fe(NO₃)₃)·9H₂O) and a Co salt (for example, Co(NO₃)₂)·6H₂O), and a gelling agent (for example, citric acid, ethylenediaminetetraacetic acid, glycine, or the like) are mixed using water (distilled water or ion-exchange water) or the like as a solvent. The obtained mixture is heated to, for example, 50°C to 90°C to remove the solvent, thereby obtaining a gelled product. This gelled product is pre-calcined, for example, in air at 300°C to 500°C (for example, 450°C) for 10 minutes to 6 hours (for example, 1 hour) to synthesize a precursor. Next, this precursor is calcined, for example, in air at 600°C to 800°C for 1 to 24 hours, and thereby Ca₂FeCoO₅ that is a target substance can be synthesized. The calcination conditions can be changed to conditions in which calcination is performed, for example, at 600°C for a predetermined time (1 to 12 hours), the temperature is then increased, and calcination is performed, for example, at 800°C for a predetermined time (6 to 12 hours). According to the liquid phase reaction method, synthesis can be performed at a lower temperature than a temperature in the solid phase reaction method, and Ca₂FeCoO₅ as particles having a smaller particle diameter and a higher specific surface area can be obtained.

A content of Ca₂FeCoO₅ is preferably 1% by mass or more, more preferably 5% by mass or more, further preferably 10% by mass or more, even more preferably 20% by mass or more, particularly preferably 30% by mass or more, and extremely preferably 40% by mass or more, on the basis of the total mass of the catalyst, from the viewpoint that the life-span characteristics can be further improved. The content of Ca₂FeCoO₅ is preferably 90% by mass or less, more preferably 80% by mass or less, further preferably 67% by mass or less, even more preferably 35% by mass or less, particularly preferably 25% by mass or less, and extremely preferably 15% by mass or less, on the basis of the total mass of the catalyst, from the viewpoint that the output characteristics can be further improved. The content of Ca₂FeCoO₅ is preferably 10 to 90% by mass, more preferably 20 to 80% by mass, further preferably 20 to 67% by mass, and particularly preferably 20 to 35% by mass, from the viewpoint that both of life-span characteristics and output characteristics can be more highly attained.

YBaCo₄O₇ has, for example, a particulate shape. The particle diameter of YBaCo₄O₇ is not particularly limited, but may be 0.01 µm or more, 0.02 µm or more, 1 µm or more, or 2 µm or more, and may be 50 µm or less, 20 µm or less, 1 µm or less, or 0.5 µm or less.

A specific surface area of YBaCo₄O₇ may be 0.05 m²/g or more, 0.1 m²/g or more, 0.2 m²/g or more, or 0.3 m²/g or more, and may be 100 m²/g or less or 50 m²/g or less.

YBaCo₄O₇ can be synthesized by a solid phase reaction method (a sintering method or the like) and can also be synthesized by a liquid phase reaction method (a polymerized complex method, a hydrothermal synthesis method, or the like). In the liquid phase reaction method, for example, first, a Y salt (for example, Y(NO₃)₃·6H₂O or (CH₃COO)₃Y·4H₂O), a Ba salt (for example, Ba(NO₃)₂ or (CH₃COO)₂Ba) and a Co salt (for example, Co(NO₃)₂·6H₂O or (CH₃COO)₂CO·4H₂O), and a complexing agent (for example, citric acid, ethylenediaminetetraacetic acid, glycine, or the like) are mixed using water (distilled water or ion-exchange water) or the like as a solvent. The obtained mixture is heated to, for example, 60°C to 100°C (for example, 70°C) to remove the solvent, thereby obtaining a gelled product. This gelled product is pre-calcined, for example, in air at 400°C to 800°C (for example, 600°C) for 1 to 24 hours (for example, 7 hours) to synthesize a precursor. Next, this precursor is, for example, pulverized as necessary, and then is calcined in air at 900°C to 1300°C (for example, 1100°C) for 1 to 48 hours (for example, 16 hours), and thereby YBaCo₄O₇ that is a target substance can be synthesized. According to the liquid phase reaction method, synthesis can be performed at a lower temperature than a temperature in the solid phase reaction method, and YBaCo₄O₇ as particles having a smaller particle diameter and a higher specific surface area can be obtained.

A content of YBaCo₄O₇ is preferably 1% by mass or more, more preferably 5% by mass or more, further preferably 10% by mass or more, even more preferably 33% by mass or more, particularly preferably 65% by mass or more, and extremely preferably 80% by mass or more, on the basis of the total mass of the catalyst, from the viewpoint that the output characteristics can be further improved. The content of YBaCo₄O₇ is preferably 98% by mass or less, more preferably 95% by mass or less, further preferably 90% by mass or less, even more preferably 85% by mass or less, particularly preferably 80% by mass or less, more particularly preferably 75% by mass or less, and extremely preferably 70% by mass or less, on the basis of the total mass of the catalyst, from the viewpoint that the life-span characteristics can be further improved. The content of YBaCo₄O₇ is preferably 10 to 90% by mass, more preferably 20 to 80% by mass, further preferably 33 to 80% by mass, and particularly preferably 65 to 80% by mass, from the viewpoint that both of life-span characteristics and output characteristics can be more highly attained.

The catalyst for an air electrode may further contain other transition metal components that have a function as a catalyst promoting a reaction of oxygen (oxygen evolution reaction and/or oxygen reduction reaction), in addition to Ca₂FeCoO₅ and YBaCo₄O₇, as long as they do not inhibit the effect of the present invention.

The catalyst described above can be widely applied to an air electrode used in a known metal air secondary battery, and is conceivable to be applied to, for example, a bifunctional air electrode for an aqueous air battery mounted in a vehicle.

### <Air electrode and metal air secondary battery>

Hereinafter, examples of an air electrode using the catalyst of the above-described embodiment and a metal secondary battery including this air electrode will be described.

The metal air secondary battery includes at least an air electrode (positive electrode), a negative electrode, and an electrolyte. In the metal air secondary battery, the electrolyte is disposed at least between the air electrode and the negative electrode, and thereby ion conduction between the air electrode and the negative electrode is performed. The metal air secondary battery may be configured by one cell (unit cell) including at least an air electrode (positive electrode), a negative electrode, and an electrolyte, and may be configured by a plurality of cells.

The metal air secondary battery may further include a separator for short circuit suppression between the air electrode and the negative electrode. The separator is not an essential constituent element.

The air electrode, the negative electrode, the electrolyte, and the separator may be housed in a housing (battery case). Specific examples of the shape of the housing include a coin form, a plate form, a cylinder form, and a laminate form. The housing may be an open battery case and may be a closed battery case. The open battery case is a battery case having a structure in which at least the air electrode can be in full contact with the air. On the other hand, in a case where the housing is a closed battery case, the closed battery case is preferably provided with a gas (air) inlet tube and a gas (air) outlet tube. In this case, the introduced and emitted gases preferably have a high oxygen concentration and are more preferably pure oxygen. Furthermore, at the time of discharging, it is preferable to increase the oxygen concentration, and at the time of charging, it is preferable to decrease the oxygen concentration.

The metal air secondary battery can be obtained, for example, by disposing an air electrode in a housing, then injecting an electrolyte into the housing, and immersing a negative electrode and a separator in the electrolyte.

Hereinafter, each constituent element of the metal air secondary battery will be described.

### (Air electrode)

The air electrode includes a current collector (air electrode current collector), and a catalyst layer and a gas diffusion layer that are provided in this current collector. However, the gas diffusion layer is not an essential constituent element.

The disposition of the air electrode current collector, the catalyst layer, and the gas diffusion layer is not particularly limited, and typically, the gas diffusion layer is disposed on the outer air side and the catalyst layer is disposed on the electrolyte side. Furthermore, the air electrode current collector may be disposed on the outmost air side (that is, on a side of the gas diffusion layer opposite to the catalyst layer), and may be disposed between the catalyst layer and the gas diffusion layer.

The air electrode current collector is configured, for example, by a metal material having conductivity, such as stainless steel, copper, or nickel. The shape of the current collector is not particularly limited, and for example, is a mesh shape. A lead (air electrode lead) is connected to the air electrode current collector. An air electrode terminal (positive electrode terminal) is provided at the tip end of the air electrode lead.

The catalyst layer contains at least the catalyst for an air electrode of the above-described embodiment and a conductive carbon material. It is preferable that the catalyst and the conductive carbon material are evenly dispersed in the catalyst layer. In the catalyst layer, the catalyst may be supported on the conductive carbon material.

A content of the catalyst in the catalyst layer is preferably 20% by mass or more, more preferably 40% by mass or more, and further preferably 60% by mass or more, on the basis of the total mass of the catalyst layer, from the viewpoint that the balance between life-span characteristics and output characteristics becomes more favorable. The content of the catalyst in the catalyst layer is preferably 90% by mass or less, more preferably 80% by mass or less, and further preferably 70% by mass or less, on the basis of the total mass of the catalyst layer, from the viewpoint that the balance between life-span characteristics and output characteristics becomes more favorable. In the present embodiment, the total amount of Ca₂FeCoO₅ and YBaCo₄O₇ in the catalyst layer is preferably equal to or more than the above-described lower limit value, on the basis of the total mass of the catalyst layer.

A content of Ca₂FeCoO₅ in the catalyst layer is preferably 7% by mass or more, more preferably 14% by mass or more, and further preferably 20% by mass or more, on the basis of the total mass of the catalyst layer, from the viewpoint that the life-span characteristics can be further improved. The content of Ca₂FeCoO₅ in the catalyst layer is preferably 30% by mass or less, more preferably 27% by mass or less, and further preferably 24% by mass or less, on the basis of the total mass of the catalyst layer, from the viewpoint that the output characteristics can be further improved.

A content of YBaCo₄O₇ in the catalyst layer is preferably 13% by mass or more, more preferably 26% by mass or more, and further preferably 40% by mass or more, on the basis of the total mass of the catalyst layer, from the viewpoint that the output characteristics can be further improved. The content of YBaCo₄O₇ in the catalyst layer is preferably 60% by mass or less, more preferably 53% by mass or less, and further preferably 46% by mass or less, on the basis of the total mass of the catalyst layer, from the viewpoint that the life-span characteristics can be further improved.

Examples of the conductive carbon material include graphite, carbon black, and ketjen black. In the case of using graphite, carbon black, ketjen black, or the like as the conductive carbon material, both of life-span characteristics and output characteristics can be highly attained while manufacturing cost is reduced.

A content of the conductive carbon material in the catalyst layer is preferably 5% by mass or more, more preferably 10% by mass or more, further preferably 20% by mass or more, even more preferably 30% by mass or more, particularly preferably 50% by mass or more, and extremely preferably 60% by mass or more, on the basis of the total mass of the catalyst layer, from the viewpoint of further improving output characteristics. The content of the conductive carbon material in the catalyst layer is preferably 80% by mass or less, more preferably 60% by mass or less, further preferably 40% by mass or less, even more preferably 30% by mass or less, particularly preferably 15% by mass or less, and extremely preferably 5% by mass or less, on the basis of the total mass of the catalyst layer, from the viewpoint of further improving life-span characteristics.

The catalyst layer may further contain components other than the catalyst and the conductive carbon material. Examples of the other components include a binder.

Examples of the binder include a fluorine-based binder, and polytetrafluoroethylene (PTFE) is preferably used. A content of the binder may be 1% by mass or more and may be 30% by mass or less, on the basis of the total mass of the catalyst layer, for example.

A thickness of the catalyst layer may be 0.5 µm or more and may be 500 µm or less, for example.

The gas diffusion layer has conductivity and also has a function of diffusing an oxygen gas to be used in a reaction in the catalyst layer. Therefore, in a case where the air electrode includes the gas diffusion layer, there are tendencies that the supply efficiency of the above-described gas to the catalyst layer is improved and battery characteristics (for example, output characteristics) are improved.

The gas diffusion layer contains, for example, a conductive material. As the conductive material, a conductive carbon material to be used in the catalyst layer mentioned above is exemplified. A content of the conductive material in the gas diffusion layer may be 65% by mass or more and may be 99% by mass or less on the basis of the total mass of the gas diffusion layer, for example.

The gas diffusion layer may further contain other components such as a binder that may be contained in the catalyst layer. Examples and preferred aspects of these components are the same as in the case of the catalyst layer. The content of the binder may be 5% by mass or more and may be 35% by mass or less, on the basis of the total mass of the gas diffusion layer, for example.

A thickness of the gas diffusion layer may be 0.5 µm or more and may be 500 µm or less, for example.

A total of the thickness of the catalyst layer and the thickness of the gas diffusion layer may be 1 µm or more and may be 1000 µm or less, for example.

The above-described air electrode can be produced as follows, for example.

First, a conductive material, a dispersion solvent, and a binder are mixed in a mortar, thereby producing a composition for forming a gas diffusion layer (for example, a slurry composition). Examples of the dispersion solvent include water and alcohol such as ethanol. The contents of the conductive material and the binder in the composition for forming a gas diffusion layer may be adjusted so that the content of each component in the gas diffusion layer is within the aforementioned range.

At the time of producing a composition for forming a gas diffusion layer, a dispersant may be further added. The dispersant is not particularly limited as long as it can impart dispersion stability to the conductive material, and for example, a non-ionic surfactant such as octylphenol ethoxylate can be used. As octylphenol ethoxylate, Triton X-100 is preferably used. The addition amount of the dispersant may be 10 parts by mass or more and may be 60 parts by mass or less with respect to 100 parts by mass of the conductive material, for example.

Furthermore, the catalyst for an air electrode, the conductive carbon material, and the binder are mixed, thereby producing a composition for forming a catalyst layer (for example, an ink composition). In the producing of an ink for forming a catalyst layer, the catalyst for an air electrode may be used without any change, and may be used in a state of being supported on a carrier. That is, a supported catalyst including a carrier and a catalyst supported on this carrier may be used. The carrier in the supported catalyst may be the above-described conductive carbon material.

The contents of the catalyst for an air electrode, the conductive carbon material, and the binder in the composition for forming a catalyst layer may be adjusted so that the content of each component in the catalyst layer is within the aforementioned range.

At the time of producing a composition for forming a catalyst layer, a dispersant may be further added. The dispersant is not particularly limited as long as it can impart dispersion stability to the catalyst and/or the conductive carbon material, and for example, a non-ionic surfactant such as octylphenol ethoxylate can be used. As octylphenol ethoxylate, Triton X-100 is preferably used. The addition amount of the dispersant may be 5 parts by mass or more and may be 40 parts by mass or less with respect to 100 parts by mass of the total of the catalyst and the conductive carbon material, for example.

Next, a series of operations of stretching the obtained composition for forming a gas diffusion layer and folding the composition in half is repeated 10 to 40 times. A general method can be applied as a method to be used in stretching, and the stretching method is not particularly limited as long as it is a method of smoothly stretching the composition for forming a gas diffusion layer. For example, a stretching method using an acrylic cylinder is suitable. Next, the composition is rolled by a roll press to have a prescribed thickness and then is cut, followed by drying for 1 to 2 hours at a hot plate heated to 150°C to 170°C. Thereby, a gas diffusion layer sheet is obtained. The diffusion layer sheet obtained through this process has a plate shape as a whole.

Next, the composition for forming a catalyst layer is applied to the obtained gas diffusion layer sheet, for example, by a spraying method and is subjected to a heating treatment in an inert gas atmosphere such as argon, thereby obtaining a laminate for an air electrode that includes the gas diffusion layer and the catalyst layer stacked on this gas diffusion layer. The heating treatment is performed, for example, at 300°C to 350°C for 10 to 20 minutes.

Next, the air electrode current collector is joined to the laminate for an air electrode by a press or the like, thereby obtaining an air electrode.

A method for manufacturing an air electrode is not limited to the above-described method, and an air electrode can also be produced, for example, by a method of filling a composition for forming a gas diffusion layer and a composition for forming a catalyst layer in a current collector for an air electrode without the composition for forming a gas diffusion layer and the composition for forming a catalyst layer being formed into a sheet shape (for example, a method described in Japanese Unexamined Patent Publication No. 2014-49304).

### (Negative electrode)

A negative electrode of a general air battery can be used as a negative electrode. The negative electrode includes, for example, a current collector (negative electrode current collector) and a negative electrode active material layer provided in the current collector. A lead (negative electrode lead) is connected to the negative electrode current collector. A negative electrode terminal is provided at the tip end of the negative electrode lead.

The negative electrode current collector is configured, for example, by a metal material having conductivity, such as stainless steel, copper, or nickel. The shape of the current collector is not particularly limited, and for example, is a mesh shape.

The negative electrode active material layer contains a negative electrode active material. Examples of the negative electrode active material include an elemental metal, an alloy, and a compound, each of which includes a base metal having a high reduction power (for example, a metal having a lower normal electrode potential than hydrogen) as an element. Examples of the base metal include lithium (Li), zinc (Zn), iron (Fe), and platinum (Pt).

### (Electrolyte)

The electrolyte is not particularly limited, and a known electrolyte can be used depending on the type of the negative electrode active material to be used in the negative electrode. The form of the electrolyte is also not particularly limited, and may be a liquid electrolyte, a gel electrolyte, a solid electrolyte, or the like. Specifically, for example, an aqueous potassium hydroxide solution is suitably used.

### (Separator)

The structure and the material of the separator are not particularly limited as long as they are a structure and a material that do not inhibit ion conduction between the air electrode and the negative electrode and can suppress short circuit between both electrodes. Specific examples thereof include a porous film or a resin non-woven fabric that is configured by a polyolefin such as polyethylene or polypropylene, or a resin material such as a fluororesin including polytetrafluoroethylene, polyvinylidene fluoride, or the like.

In the metal air secondary battery described above, input and output of currents at the time of charging and discharging are performed utilizing the air electrode terminal and the negative electrode terminal. Since the metal air secondary battery includes the air electrode containing the catalyst of the above-described embodiment, the metal air secondary battery shows excellent output characteristics at the time of charging and discharging, and shows excellent life-span characteristics even in a case where charging and discharging are repeated.

### Examples

Hereinafter, the contents of the present invention will be more specifically described by way of Examples and Comparative Examples; however, the present invention is not limited to the following Examples.

### (Examples 1 to 4 and Comparative Examples 1 to 4)

3.3 g of carbon (manufactured by TOKAI CARBON CO., LTD., trade name: TOKABLACK #3855), 0.909 mL of PTFE dispersion (solid content concentration: 60% by mass, manufactured by Du Pont-Mitsui Fluorochemicals Co., Ltd., trade name: PTFE 31-JR), 1.33 mL of Triton X-100 (octylphenol ethoxylate), and 4.0 mL of water were mixed in a mortar to produce a mixture slurry serving as the composition for forming a gas diffusion layer. A series of operations of stretching the obtained mixture slurry to have a thickness of 0.5 mm and folding the mixture slurry in half was repeated 40 times. Next, the mixture slurry was rolled by a roll press to have a thickness of 0.35 mm and then was cut, followed by drying for 1 hour at a hot plate heated to 160°C to obtain a gas diffusion layer sheet.

0.132 g of carbon (manufactured by TOKAI CARBON CO., LTD., trade name: TOKABLACK #3855), 0.264 g of a catalyst for an air electrode, 0.110 mL of PTFE dispersion (solid content concentration: 60% by mass, manufactured by Du Pont-Mitsui Fluorochemicals Co., Ltd., trade name: PTFE 31-JR), 0.089 mL of Triton X-100 (octylphenol ethoxylate), 0.381 mL of propanol, and 2.727 mL of water were mixed to prepare inks 1 to 8 serving as the composition for forming a catalyst layer. The air electrode catalyst used in preparation of the inks 1 to 8 was obtained by mixing Ca₂FeCoO₅ and/or YBaCo₄O₇ at the mass ratio r (YBaCO₄O₇/Ca₂FeCoO₅) described in each of Table 1 and Table 2 in a mortar.

The ink 1 obtained above was applied to the gas diffusion layer sheet obtained above by a spraying method and calcined at 335°C for 13 minutes in argon to obtain a laminate for an air electrode. A nickel mesh was pressure-bonded to the obtained laminate to obtain an air electrode 1. Furthermore, air electrodes 2 to 8 were obtained in the same manner, except that each of the inks 2 to 8 was used instead of the ink 1.

Each of experimental cells 1 to 8 illustrated in FIG. 1 was produced using each of the obtained air electrodes 1 to 8 by the following method.

First, an air electrode (1) was attached to an acrylic housing (5) provided with an opening (6) from a catalyst layer (11) side so as to block the opening (6). Next, 8 mol/L of an aqueous potassium hydroxide solution as an electrolyte (4) was injected into the above-described housing (5), and then a platinum plate as a counter electrode (negative electrode) (2) and a mercury-mercurous oxide electrode as a reference electrode (3) were immersed in the electrolyte (4) in the above-described housing (5) to produce an experimental cell (10). The reference electrode (3) was disposed between the air electrode (1) and the negative electrode (2). Note that, in FIG. 1, (12) indicates a gas diffusion layer and (13) indicates a current collector (nickel mesh).

### (Evaluation)

The output characteristics and the life-span characteristics of the cells produced above were evaluated by methods described below. Evaluation results are shown in Table 1 and Table 2.

### [Evaluation of output characteristics]

First, in an environment of 25°C, the charging-discharging cycle of OER and ORR was repeated 100 times while the OER current value was set to 20 mA/cm², the ORR current value was set to -20 mA/cm², each of OER and ORR was performed for 1 hour, and the pause time between OER and ORR was set to 3 minutes. Thereafter, ORR at a constant current density of 20 mA/cm² was executed for 1 minute, and the air electrode potential after a lapse of 1 minute was regarded as the ORR potential. The air electrode potential was specified by a potential difference between the air electrode and the reference electrode. Note that, the reference electrode actually used was a mercury-mercurous oxide reference electrode, but for the sake of convenience, the potential was converted into an RHE reference electrode standard.

The evaluation of output characteristics was performed by comparing the above-described ORR potential. Specifically, a case where the ORR potential is 0.635 V (vs RHE) or more was evaluated as "S", a case where the ORR potential is 0.630 V (vs RHE) or more and less than 0.635 V (vs RHE) was evaluated as "A", a case where the ORR potential is 0.625 V or more and less than 0.630 V was evaluated as "B", and a case where the ORR potential is less than 0.625 V was evaluated as "C". S, A, and B were evaluated as a good result, and C was evaluated as a poor result.

### [Evaluation of life-span characteristics]

First, in an environment of 25°C, the charging-discharging cycle of OER and ORR was repeated while the OER current value was set to +20 mA/cm², the ORR current value was set to -20 mA/cm², each of OER and ORR was performed for 1 hour, and the pause time between OER and ORR was set to 3 minutes, and a time point when the OER potential became 1.926 V or more or the ORR potential became 0.526 V or less was regarded as the cycle life of the battery. The life-span characteristics were evaluated based on the cycle life of the battery, a case where the cycle life is 325 cycles or more was evaluated as "S", a case where the cycle life is 300 cycles or more and less than 325 cycles was evaluated as "A", a case where the cycle life is 250 cycles or more and less than 300 cycles was evaluated as "B", and a case where the cycle life is less than 250 cycles was evaluated as "C". S, A, and B were evaluated as a good result, and C was evaluated as a poor result.

**[Table 1]**

| | | Example 1 | Example 2 | Example 3 | Example 4 |
|---|---|---|---|---|---|
| Ink | Type | 1 | 2 | 3 | 4 |
| | Mass ratio r | 9.00 | 4.00 | 2.03 | 0.49 |
| Evaluation | Life-span characteristics | B | A | S | S |
| | Output characteristics | S | S | A | B |

**[Table 2]**

| | | Comparative Example 1 | Comparative Example 2 | Comparative Example 3 | Comparative Example 4 |
|---|---|---|---|---|---|
| Ink | Type | 5 | 6 | 7 | 8 |
| | Mass ratio r | 100/0 | 49.00 | 19.00 | 0/100 |
| Evaluation | Life-span characteristics | C | C | C | S |
| | Output characteristics | S | S | S | C |

It was confirmed that the batteries of Examples 1 to 4 are excellent in life-span characteristics and output characteristics. On the other hand, it was confirmed that the life-span characteristics are not sufficient in the batteries of Comparative Examples 1 to 3 and the output characteristics are not sufficient in the battery of Comparative Example 4.

## Claims

1. A catalyst for an air electrode of a metal air secondary battery, the catalyst comprising:
Ca₂FeCoO₅ and YBaCo₄O₇, wherein
a mass ratio of a content of the YBaCo₄O₇ to a content of the Ca₂FeCoO₅ is 0.49 to 9.00.

2. An air electrode used in a metal air secondary battery, the air electrode comprising:
a catalyst layer comprising the catalyst according to claim 1 and a conductive carbon material.

3. The air electrode according to claim 2, further comprising a gas diffusion layer having conductivity.

4. A metal air secondary battery comprising the air electrode according to claim 2 or 3, a negative electrode, and an electrolyte.
